# EUROPEAN PATENT APPLICATION

(11) **EP 2 506 196 A1**
(43) Date of publication of application: **03.10.2012**
(21) Application number: 11425090.5
(22) Date of filing: 31.03.2011
(51) Int. Cl.: G06Q 10/00

(54) **Method and apparatus for management and control of information incidents and digital evidence**

(71) Applicant: DF Labs S.r.l., 20123 Milano (IT)
(72) Inventor: Forte, Dario Valentino, 26038 Torre de' Picenardi (CR) (IT)

(57) **Abstract**

A method and an apparatus for managing information incidents and digital evidence via the creation of a case including all specific information, the electronic storage of digital evidence, and the specific association of digital evidence to a given case.

## Description

### CONTEXT OF THE INVENTION

The invention proposes a method and an apparatus for managing information incidents. The invention supports the entire incident management process, from the resolution of security issues to digital forensics and case management. Specifically, the invention proposes a method and an apparatus for storing, recovering, preserving and tracing any piece of information relating to an information incident.

### DESCRIPTION OF THE STATE OF THE ART

In modern-day judicial systems, digital evidence represents a fundamental element in legal disputes or court cases. Evidence must be collected and stored in compliance with all standards, regulations or laws in force and this state of compliance must constantly be monitored. In order to be admissible in a court of law, any given document or object must comply with specific laws applicable to the acquisition, preservation and processing of evidence. In other words, the evidence must remain authentic and every step in its chain of custody must be committed to the record and preserved.

After being acquired, an item of evidence is processed and analyzed by different individuals. For example, a piece of evidence may be processed by an investigator, a police officer, a lawyer, a witness or by people tasked with managing that piece of evidence. These figures may co-exist within a single organization or operate within completely separate structures, cities or even nations. The great variety of different figures who may interact with a piece of evidence means that it is very complicated to maintain authenticity and a reliable chain of custody while sharing the results obtained by each figure during the analysis process. Indeed, the different physical or geographical locations of the individual operators makes it very problematic-if not almost impossible—to exchange information on a given item of evidence.

If the authenticity or chain of custody of a piece of evidence is challenged, it may not be admissible into a court of law. In some cases, for specific crimes, the inappropriate use or processing of a piece of evidence (tampering) may be punishable by imprisonment.

The delicate nature of the evidence management process is accentuated when this evidence is in digital format, e.g., stored in a memory unit such as a computer hard disk, on a compact disk (CD) or on some other form of digital storage media. If not properly managed, this digital evidence can easily be corrupted or even destroyed.

Increasingly short response times to information incidents are demanded in order to ensure continuity of the operational flow. The absence of a centralized system for collecting information and rendering it usable and the lack of an alternative communication channel render information exchange difficult and inefficient and slow the incident response process.

The use of a variety of different tools to carry out analysis also makes it difficult to collect the information in a structured and well organized way. Since the information contained in separate documents or files is processed by different operators, it is essential that the results of each individual instance of analysis can be correlated to a specific operator.

There is thus a need for a system that allows individuals working at different and separated workstations to access evidence without affecting the authenticity of said evidence and that also provides a method for ensuring that a reliable chain of custody is kept for the evidence. This system must be able to collect all information produced by the individual analysis tools in a single centralized point and guarantee that this information can immediately be used and exchanged with other operators.

### SUMMARY OF THE INVENTION

The present invention is a method and an apparatus for managing information security cases and the associated evidence and information. The method and apparatus comprise the creation (opening) of a case and the association of evidence and information with it, and the digital storage of all evidence within a database. All information or evidence is kept associated with the respective case. The invention assists the user/operator (administrator, investigator) through all the steps necessary in proper forensic analysis procedures, focusing attention on aspects that are required by standards, regulations and laws in force. Given that the information in these cases is of a sensitive nature, the invention introduces a system of user profiling in order to provide well-defined and granular access to the information contained in the system. This characteristic responds to security and access segregation requisites provided for in international legislation regarding both private enterprises and governmental bodies.

The specifications described above are analyzed in greater detail in the following flowcharts and screenshots of the invention. The graphic materials illustrate only certain applications of the invention and should not be considered as representing the totality of its characteristics. The invention can be applied dynamically to other contexts of use.
Fig. 1 is a flowchart representing the model execution of the method for the creation of a new case;
Fig. 2 is a flowchart representing the model execution of the method for adding information to a case;
Fig. 3 is a flowchart representing the model execution of the method for adding information about a host;
Fig. 4 is a flowchart representing the model execution of the method for adding information associated with a piece of evidence;
Fig. 5 is a flowchart representing the model execution of the method for adding photographs associated with a host or piece of evidence;
Fig. 6 is a flowchart representing the model execution of the method for adding information associated with an evidence clone;
Fig. 7 is a flowchart representing the model execution of the method for adding information regarding the evidence clone acquisition process;
Fig. 8 is a flowchart representing the model execution of the method for adding or editing events on a case timeline;
Fig. 9 is a flowchart representing the model execution of the method for adding or editing events in a case chain-of-custody record;
Fig. 10 is a flowchart representing the model execution of the method for adding or editing case notes;
Fig. 11 is a flowchart representing the model execution of the method for adding or editing information on the methods used to perpetrate an attack (modus operandi);
Fig. 12 is a flowchart representing the model execution of the method for adding or editing incident impacts (structural, temporal and monetary);
Fig. 13 is a flowchart representing the model execution of the method for adding or editing restoration actions undertaken to mitigate the effects of an incident;
Fig. 14 is a flowchart representing the model execution of the method for adding or editing case attachments;
Fig. 15 is a flowchart representing the model execution of the method for adding or editing snapshots associated with a host in a given case;
Fig. 16 is a flowchart representing the model execution of the method for viewing bookmarks to a digital storage device/medium associated with a host in a given case;
Fig. 17 is a flowchart representing the model execution of the method for generating reports in simple or advanced format;
Fig. 18 is a flowchart representing the model execution of the method for interfacing external tools with the invention;
Fig. 19 is a flowchart representing the model execution of the method for customizing the dashboard;
Fig. 20 is a flowchart representing the model execution of the method for adding or editing tasks associated with operators;
Fig. 21 is a flowchart representing the model execution of the method for managing/associating external notifications received from forensic analysis or networking tools;
Fig. 22 is a flowchart representing the model execution of the method for managing/associating anonymous notifications received from users (whistleblowers);
Fig. 23 is a flowchart representing the model execution of the method for conducting searches;
Fig. 24 is a flowchart representing the model execution of the method for handling messages via the internal messaging system;
Fig. 25 is a flowchart representing the model execution of the method for adding or editing information associated with the forensic laboratory;
Fig. 26 is a flowchart representing the model execution of the method for adding or editing information associated with incident templates (template wizard);
Fig. 27 is a flowchart representing the model execution of the method for adding or editing information associated with template reports;
Fig. 28 is a flowchart representing the model execution of the method for managing or editing invention settings;
Fig. 29 is a flowchart representing the model execution of the method for adding or editing information associated with a ticket;
Fig. 30 is a flowchart representing the model execution of the method for adding or editing information associated with a solution;
Fig. 31 is a flowchart representing the model execution of the method for adding or editing events on a ticket timeline;
Fig. 32 is a flowchart representing the model execution of the method for synchronizing two databases associated with the invention;

### DETAILED DESCRIPTION OF THE INVENTION

The principal purpose of the invention is to manage all the information comprising and defining a case. All suitably credentialed operators are able to access information or evidence and make their contribution by adding or modifying details. Digital evidence may reside within any sort of digital storage media, such as CDs, DVDs, floppy disks, pen drives, hard disks, log files or report files. In accordance with the purpose of the invention, the operator enters information, giving each item an unambiguous identification; each element entered and stored within the invention has its own identification code distinguishing it from every other piece of information or evidence. After having created a case, an operator is able to add information such as affected hosts, available evidence, evidence clones, notes, methods, impacts, restoration plans, timeline, chain of custody, snapshots and bookmarks, depending on case type (forensic analysis, incident response or IT). This system guarantees compliance with legislated standards and regulations and the authenticity of evidence.

The invention requires the installation of one or more server components. If the decision is made to locate the invention on a single platform (server), both the software and the storage hardware will be located in a single point. If operational demands require separate installation of the two components, the two functions may be divided. This configuration illustrates only one of the many possible configurations both for storage and for the network. The invention may function on a variety of platforms, including: distributed systems, centralized systems, stand-alone computers and similar devices/systems.

The system comprises a plurality of client computers connected to the central server via conventional network communication channels. The system server is connected to the ICT network. It supplies the application and allows access to the data and to other connected client resources. Communication may take place over wired or wireless infrastructure or a combination of the two. Systems connecting to the invention may be of various type, such as wireless or other similar devices. The system server is composed of at least one central processing unit (CPU). The CPU in turn may be composed of one or more microprocessors. The server memory may contain a random access memory (RAM), a removable mass storage device, a flash memory and various combinations of common storage devices. The memory generally contains the operating system of the system server. In the case of the proposed invention, the system server also contains the software for the invention, the database and other software packets that provide invention functionalities. The operating system can be any of the commonly available UNIX operating systems such as, but not limited to, Ubuntu Server, CentOS, BSD or Sun Polaris. The database management system includes a database implemented according to the rules of relational databases.

To support the operations and functions of the invention, the memory may be partially used as a cache memory for temporary storage of information. The invention is able to use the memory for storage, visualization or modification of information contained in it.

For the proper use of the invention, the client system must have at least one CPU and one random access memory. Furthermore, it must be outfitted with a common browser for Internet navigation. Examples include Microsoft Internet Explorer, Mozilla Firefox, Apple Safari or Google Chrome.

During the normal use of the invention it is possible to for multiple connected clients in different physical or geographical locations to use the invention. The entire operation flow guarantees that the evidence is stored in a way that prevents any sort of alteration and that the chain of custody is maintained and verified. The invention is able to allow more than one mode of access to the data, such as, for example, administrator mode or investigator mode. The invention is able to store, display, trace, or remove information and manage user accounts. In brief, a user may request an account, access the system with the account and view only the information or evidence associated with that specific account. The invention is thus able to differentiate access to the software and assign different access privileges to information or evidence stored in the database for one or more users/operators (administrators and/or investigators).

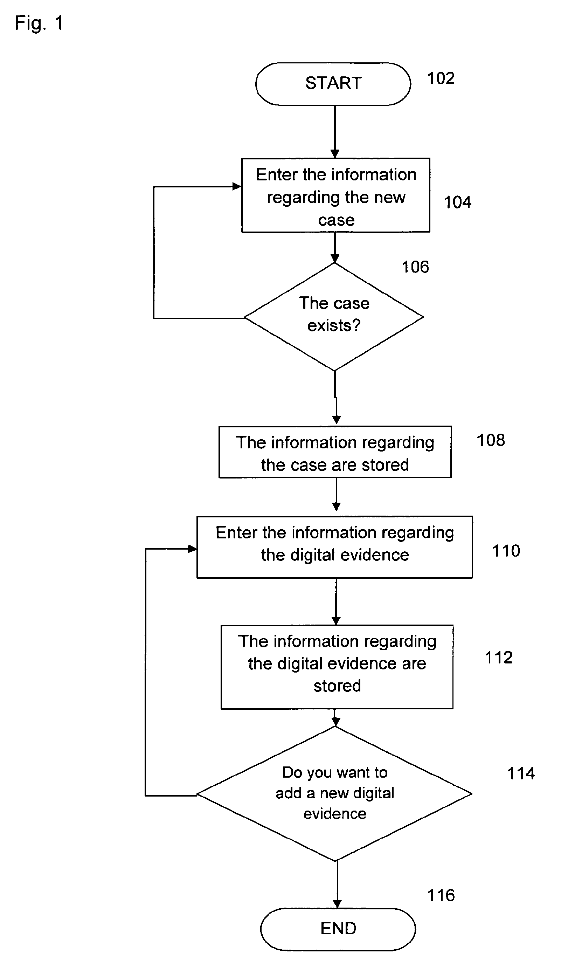

Figure 1 is a flowchart representing the model execution of the method for managing information associated with a case. The method begins at step 102 and proceeds to step 104, where the operator—in this case the administrator—enters case information. Step 106 verifies whether there is a already a case with the same name; if so, the method returns to step 104 and the administrator must chose a different name. At step 108, the method adds the case to the database. At step 110, the method creates all the records corresponding to the individual items of information comprising the case. At step 112, the method saves the entered information to the database. At step 114, if the investigator chooses to add other information to the given case, the method proceeds to step 110; if not, the method terminates at step 116.

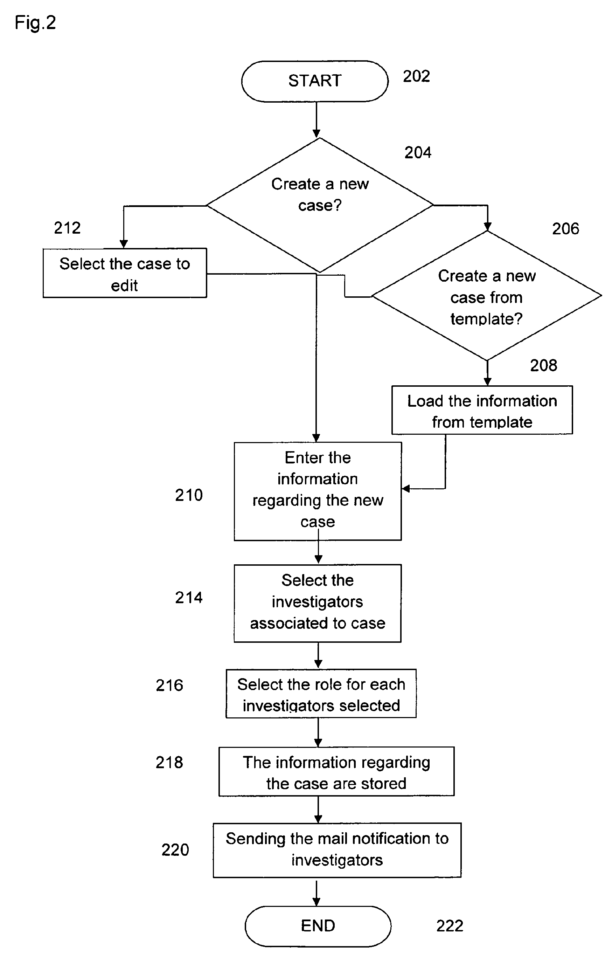

Figure 2 is a flowchart representing the model execution of the method for creating or editing a case. The method begins at step 202 and proceeds to step 204, where the administrator chooses between creating a new case or editing the information associated with an existing case. If the former is chosen, the method proceeds to step 206, where the administrator has the option of creating a new case from a template. If the administrator chooses to do so, the method continues to step 208, where the information related to the template is loaded. If the administrator decides not to create a new case, the method proceeds to step 212, where the administrator selects an existing case to be edited. Steps 208 and 212 both proceed to step 210, where the administrator enters information associated with the case. The method then proceeds to step 214, where the administrator selects the investigators assigned to the case, i.e., the investigators who will have access to case information. At step 216, the administrator is able to specify the roles held by each investigator selected in step 214. The role selection process determines the access privileges each investigator will have to case information. At step 218, the method saves the entered information and sends an email step 220 notifying all operators involved in the case of the additions/changes. The method terminates at step 222.

The case creation screen may have different fields, including but not limited to: case name, case classification (e.g., incident response, forensic analysis), and case type (e.g., civil, criminal, internal affairs). It also includes a section for assigning investigators to the case and specifying roles for each of them. After all information has been entered, the "save case" button will save the case to the database and send an email notifying the selected investigators. The administrator also has the option of selecting a template to follow in creating the case. There is also a further screen that allows the administrator to add optional fields.

After a case has been created, the associated information is displayed on the Details tab. This includes case information, information added in optional fields, and the hosts involved in the given case. The case information includes all items entered by the administrator during the case creation phase. The interface provides all case management tabs: Details; Notes; Methods; Assessment; Expectations; Records; Timeline; Chain of Custody (CoC); Snapshot; and Bookmarks.

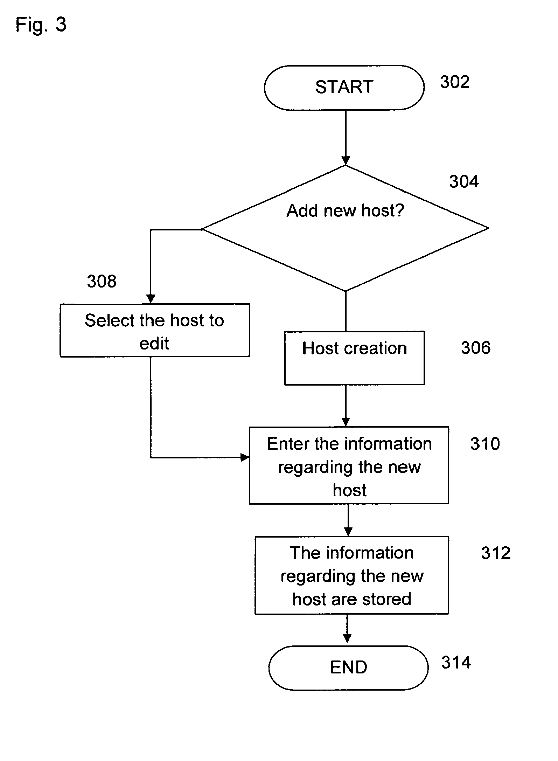

Figure 3 is a flowchart representing the model execution of the method for adding or editing information associated with a host. The method begins at step 302 and proceeds to step 304, where the user may add a new host or edit the information for an existing host. If the former is chosen, the method goes to step 306; if the latter is chosen it proceeds to step 308, where the host to be edited is selected. Steps 306 and 308 both proceed to step 310, where the user provides information associated with the host that is being added or modified. The method saves the work done at step 312 and terminates at step 314.

After a host has been created/registered, the associated information is displayed on the Details tab, which shows the information added in optional fields and the events added to the chain of custody, along with information on the evidence contained within or associated with the selected host and the photo gallery associated with the host. For each selected element, the invention generates a barcode which can be printed and applied directly to the corresponding physical host. Via the host interface, it is possible to access all functions associated with the host, such as editing associated information, adding a new photograph, adding a new event to the chain of custody, adding a new item of evidence, generating a report with host details, generating a report with additional specified parameters, or generating a barcode report.

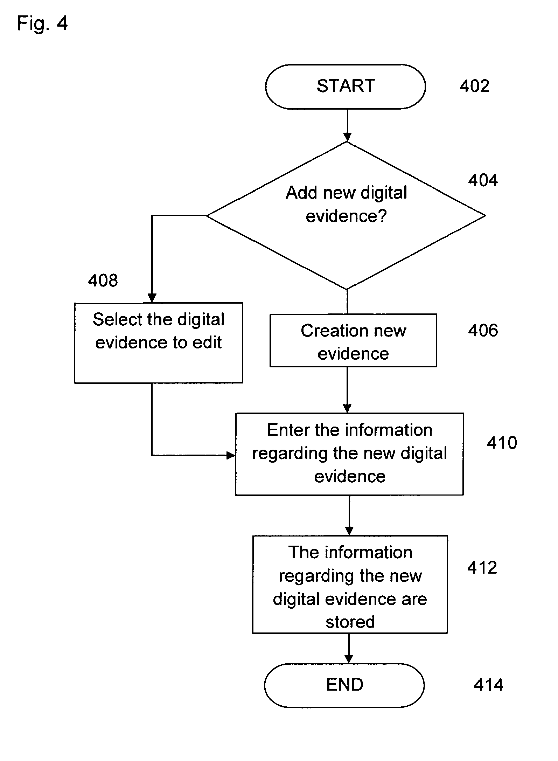

Figure 4 is a flowchart representing the model execution of the method for adding or editing information associated with an item of evidence. The method begins at step 402 and proceeds to step 404, where the user has the choice of adding a new item of evidence or modifying the information associated with an existing piece of evidence. Choosing the former leads to step 406, while the latter leads to step 408 for the selection of the item of evidence to be modified. Steps 406 and 408 both proceed to step 410, where information is added to the item of evidence that is being added or modified. The information is saved to memory in step 412 and the process concludes at step 414.

After having added a new piece of evidence, the associated information is displayed on the Details tab. This section shows information added to the optional fields and the events added to the chain of custody. It also shows information regarding clones generated from the selected item of evidence and also the associated photo gallery. The invention generates a barcode for each selected element. The barcode can be printed and applied directly to the corresponding physical piece of evidence. Via the evidence interface it is possible to access all functions associated with the evidence, such as editing associated information, adding a new photograph, adding a new event to the chain of custody, adding a new evidence clone, generating a report with the details associated with the evidence, generating an encrypted report with operator public keys, or generating the barcode report. Where the information was obtained via external tools, the invention illustrates the source of the data by means of a specific icon.

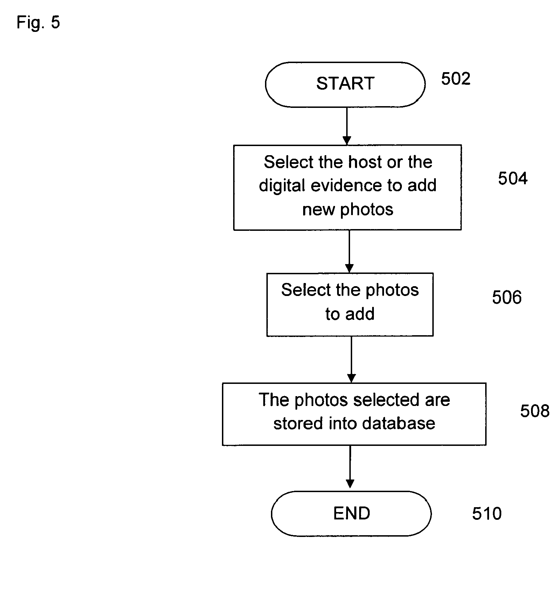

Figure 5 is a flowchart representing the model execution of the method for adding photographs to a host or an item of evidence. The method begins at step 502 and proceeds to step 504, where the investigator selects the host or item of evidence to which the new photograph is to be associated. After the host/evidence is chosen, the method proceeds to step 506, where the investigator selects one or more photographs to add to the item chosen at step 504. At step 508, the method saves the information to the database. The method terminates with step 510.

After an item of evidence has been added, the associated information is displayed on the associated Details tab. The screen offers the possibility of viewing the photographs in their original format as thumbnails. Detailed information is provided for each photo such as EXIFF data incorporated into the photo itself and extracted when the photo is saved to the database. The screen includes the section for the addition of information associated with a new item of evidence.

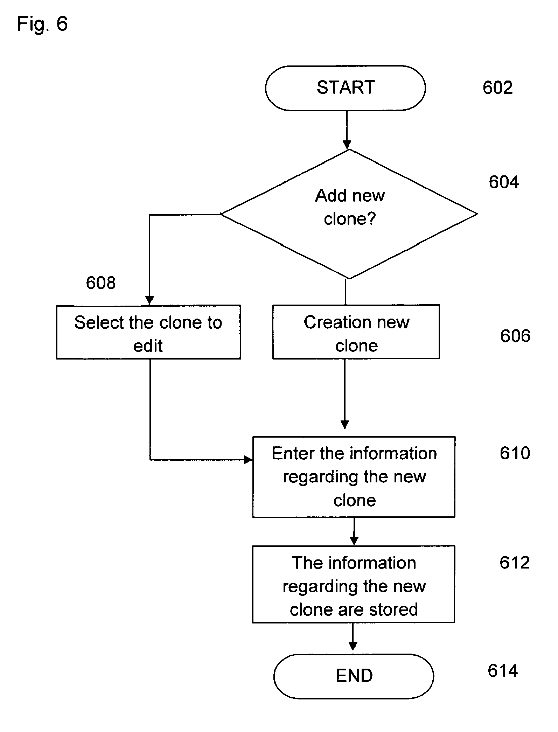

Figure 6 is a flowchart representing the model execution of the method for entering or editing information associated with a clone. The method begins at step 602 and proceeds to step 604, where the investigator chooses whether to add a new clone or modify the information associated with an existing clone. If the choice is made to add a new clone, the method proceeds to step 606. If the investigator does not wish to add a new clone, the method proceeds to step 608, where the investigator selects an existing clone for modification. Steps 606 and 608 both proceed to step 610, where the investigator is able to enter information the clone that is being added or modified. The method saves the information at step 612 and terminates at step 614.

After a clone has been added, the associated information is displayed on the Details tab. This section shows the information added to optional fields and the digital storage medium used during the acquisition phase. It also displays the events added to the chain of custody and the list of logs generated during the acquisition process. The invention generates a barcode for each selected item. The barcode can be printed and applied directly to the storage medium containing the clone. The clone interface gives access to all functions associated with the clone, such as modifying associated information, adding a new acquisition log, adding a new event to the chain of custody, generating a report with clone details, generating an encrypted report with the public keys of operators or generating the barcode report.

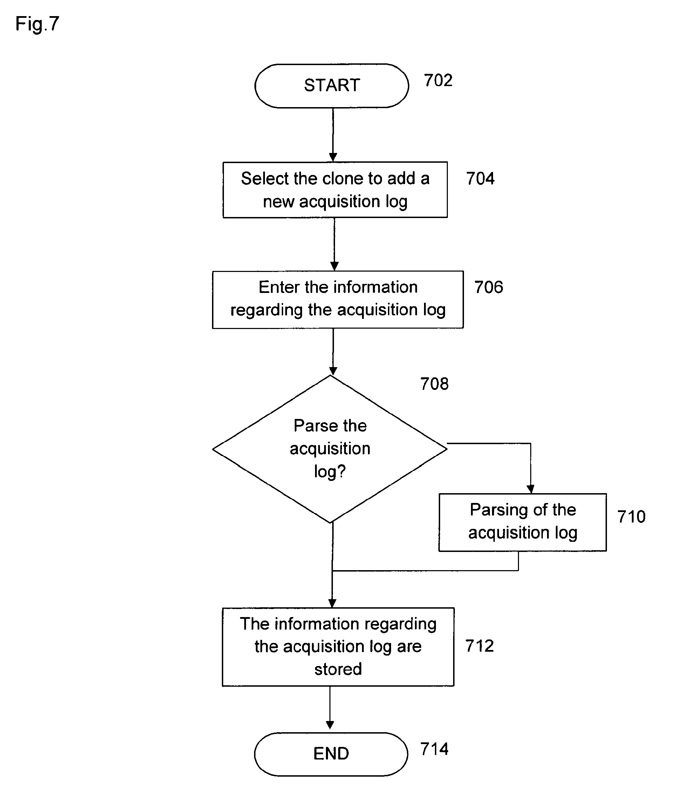

Figure 7 is a flowchart representing the model execution of the method for adding information regarding the clone acquisition procedure. The method begins at step 702 and proceeds to step 704, where the investigator selects the clone for which an acquisition log is to be added. At step 706, the investigator adds or selects information associated with an acquisition log. At step 708, the method inquires whether the acquisition log has to be processed by the parsing engine or not. If the answer is yes, the method proceeds to step 710, where the acquisition log is processed. The method proceeds to step 712, where the information entered at the previous step is saved to the database, and terminates at step 714.

After an acquisition log has been added, the associated information is displayed in the Details section. If the log was also processed by the parsing engine, the interface shows the icon of the tool that generated the acquisition log. The invention allows exportation of acquisition logs saved to the database.

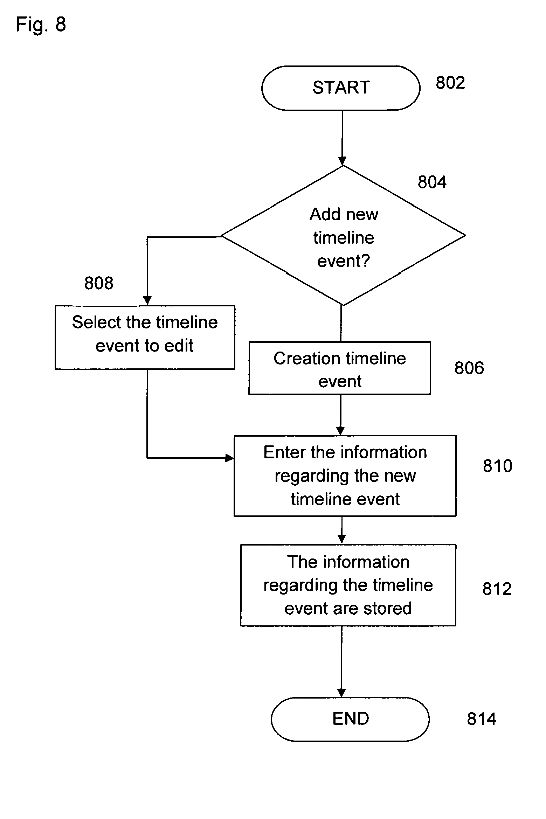

Figure 8 is a flowchart representing the model execution of the method for adding or modifying information associated with a timeline event. The method begins at step 802 and proceeds to step 804, where the investigator has the choice of adding a new timeline event or modifying the information associated with an existing timeline event. If the investigator wishes to add a new event, the method proceeds to step 806. If not, the method proceeds to step 808 to select the timeline event to be edited. Steps 806 and 808 both lead to step 810, where the investigator enters information associated with the timeline event that is being added or edited. The method saves all changes at step 812 and terminates at step 814.

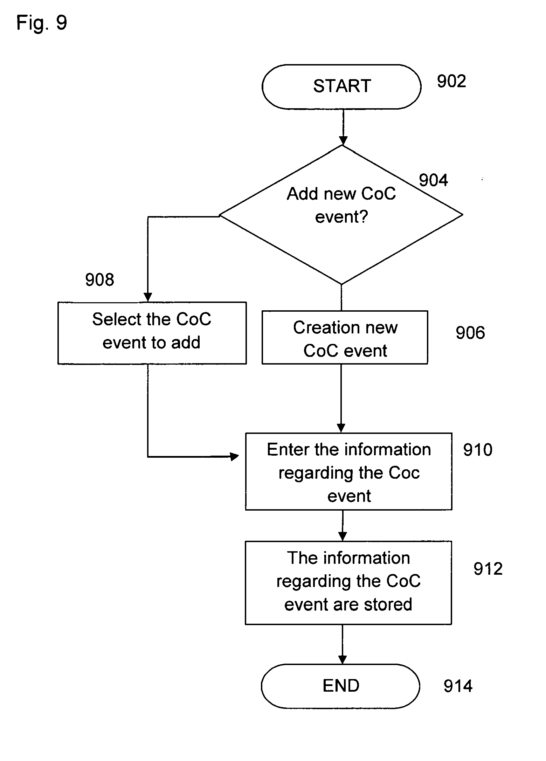

After a timeline event is created, the associated information is displayed on the Details tab. This screen contains two subsection: one shows the timeline in graphic format while the second shows events in a table. The timeline interface provides access to all functions associated with the timeline. These include: adding a new event, generating a report, generating a report selecting additional parameters, shifting to the graphic view or displaying the current day in graphic format. In the tabular view, the padlock icons indicate an event that has been added automatically by the invention. These events cannot be deleted or modified. The function of these events is to trace all activities carried out by the operator. Fig. 9 is a flowchart representing the model execution of the method for adding or modifying information associated with a chain-of-custody event. The method begins at step 902 and proceeds to step 904, where the investigator has the option of adding a new event to the chain of custody or editing an existing event. If the investigator chooses to add a new event to the chain of custody, the method proceeds to step 906. If the investigator chooses not to add a new event, the method proceeds to step 908, where the investigator selects an existing event to modify. Steps 906 and 908 both lead to step 910, where the investigator adds information to the chain-of-custody event that is being added or modified. The method saves all changes at step 912 and terminates at step 914.

After having added a chain-of-custody event, the related information is displayed on the Details tab. The chain-of-custody interface gives access to all functions associated with the chain of custody, such as generating a report or generating a report with specific additional parameters.

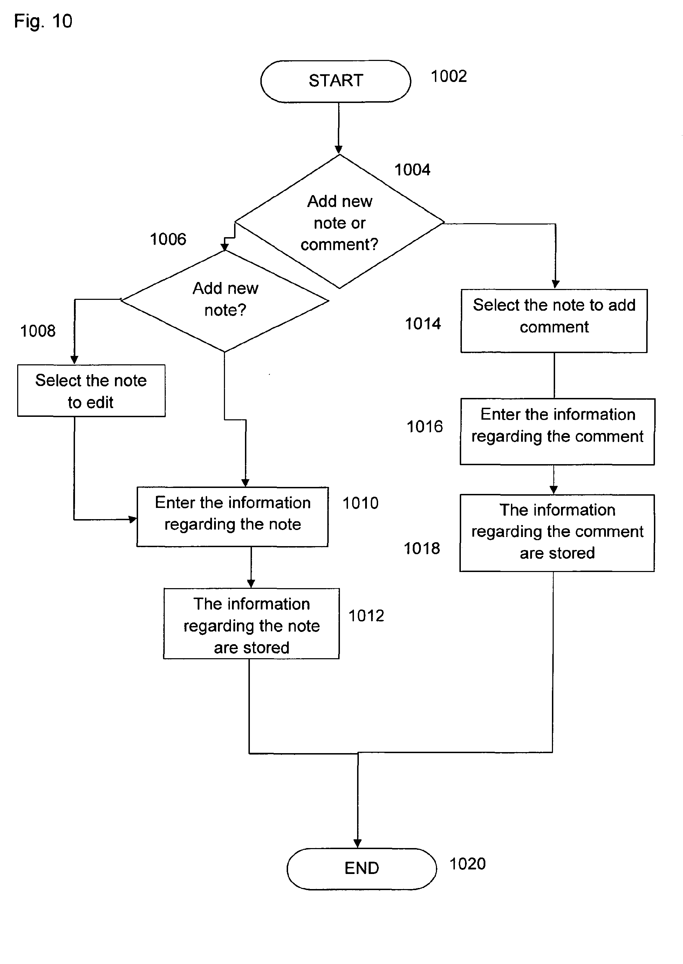

Figure 10 is a flowchart representing the model execution of the method for adding or editing information associated with a note or comments. The method begins at step 1002 and proceeds to step 1004, where the operator chooses whether to perform operations on the notes or on the comments. If the investigator chooses to add a note, the method proceeds to step 1006, where the investigator chooses between adding a new note or editing the information associated with an existing note. If the investigator chooses to edit an existing note, the method proceeds to step 1008, where the investigator selects an existing note. Regardless of whether the investigator chooses to add or to edit a note, the method proceeds to step 1010 where the investigator adds information associated with the note. The method saves all changes at step 1012. If the investigator chooses to perform operations on the comments, the method proceeds to step 1014, where the investigator selects a note. After the note is selected, the method proceeds to step 1016, where the investigator adds information regarding the comment and has the option of selecting a file to attach to the comment. The method saves all information added to the comment at step 1018 and terminates at step 1020.

After a note has been created, the corresponding information is displayed on the Details tab, while the comments associated with the notes are viewable in the note summary section. The comments section has a button that allows the operator or administrator to delete a comment from a note. The list of the notes is on the left side of the screen. The notes interface provides access to all functions associated with the notes, such as adding a new note or generating a report. There is also a specific function that allows the operator to attach a file to a comment.

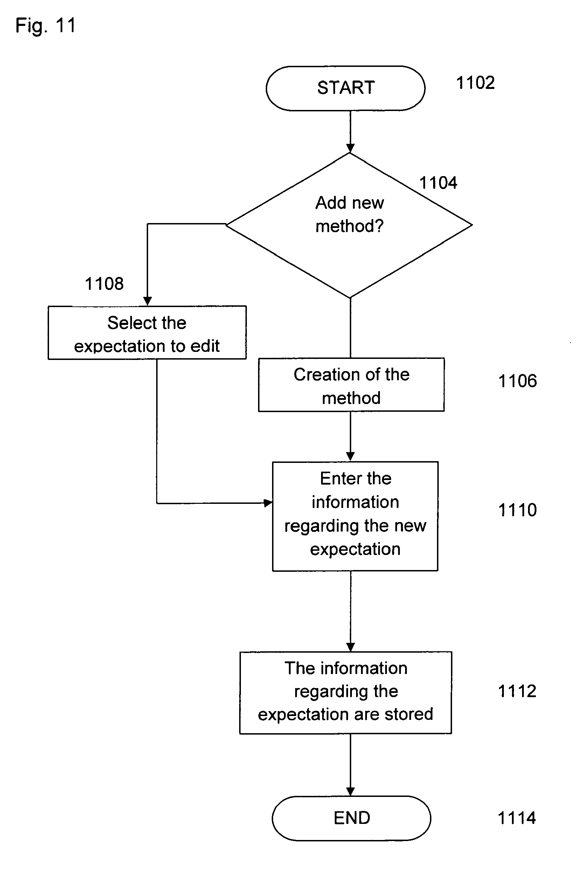

Figure 11 is a flowchart representing the model execution of the method for adding or editing information associated with a method used to perpetrate an attack (modus operandi). The method (invention process) begins at step 1102 and proceeds to step 1104, where the investigator may add a new attack method or edit information relating to one that has already been added. If the investigator chooses to add a new attack method, the invention proceeds to step 1106. If the investigator chooses to edit an existing attack method, the invention proceeds to step 1108, where the investigator chooses which attack method to edit. Steps 1106 and 1108 both lead to step 1110, where the investigator adds information regarding the attack method that is being added or edited. The invention saves the changes to the database at step 1112 and terminates at step 1114.

After a new attack method has been added, the associated information is displayed on the Details tab. The attack method interface provides access to all pertinent functions, such as adding a new attack method, generating a report, generating a report with additional parameters or editing information relating to an existing attack method.

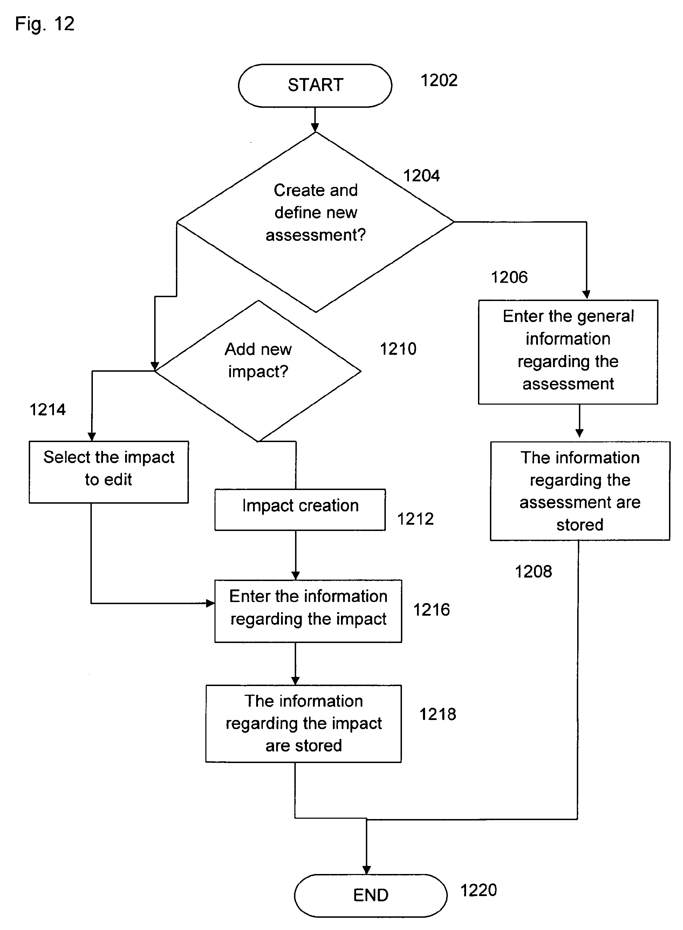

Fig. 12 is a flowchart representing the model execution of the method for adding or editing information associated with an impact. The method begins at step 1202 and proceeds to step 1204, where the investigator has the option of providing general information on impacts or adding or editing individual impacts. If the decision is made to provide general information on impacts, the method proceeds to step 1206, where the information is added. The method proceeds to step 1208, where the information added is saved to the database. If the investigator chooses to work on individual impacts, the method proceeds to step 1210, where the investigator chooses between adding a new impact or editing an existing impact. If the investigator chooses to add a new impact, the method proceeds to step 1212, if not, it proceeds to step 1214, where the existing impact to be edited is selected. Steps 1212 and 1214 both proceed to step 1216, where the investigator enters information associated with the impact that is being added or edited. There are three possible types of impacts: structural, monetary and temporal. The method saves all information at step 1218 and terminates at step 1220.

After having defined the general impact information and added an impact, the associated information is displayed on the Details tab. The tab is composed of a section with the general impact information, a section with the structural impacts, a section containing the temporal impacts, and a section with monetary impacts. The impact interface provides access to all functions associated with impacts, such as adding information associated with the impacts, adding a new structural impact, adding a new temporal impact, adding a monetary impact, generating a report, generating a report with additional parameters or editing the information associated with an existing impact.

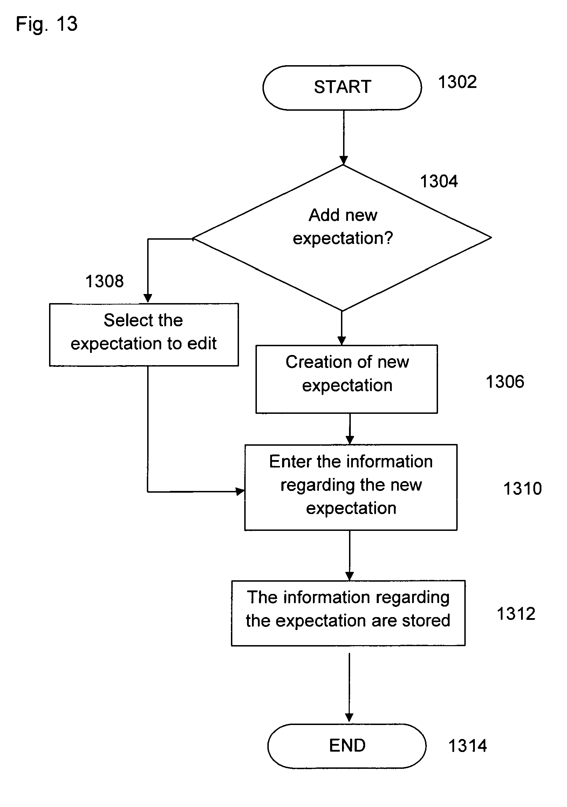

Figure 13 is a flowchart representing the model execution of the method for adding or editing information associated with a restoration action. The method begins at step 1302 and proceeds to step 1304, where the investigator chooses between adding a new restoration action or editing the information associated with an existing action. If the choice is to add a new restoration action, the method proceeds to step 1306, otherwise the method proceeds to step 1308, where the investigator selects the restoration action to edit. Steps 1306 and 1308 both lead to step 1310, where the investigator adds information associated with the added or edited restoration action. The method saves all changes at step 1312 and terminates at step 1314.

After having added a restoration action, the associated information is displayed on the Details tab. The interface for restoration actions provides access to all associated functions, including adding a new restoration action, generating a report, generating a report with additional parameters, or editing the information associated with an existing restoration action.

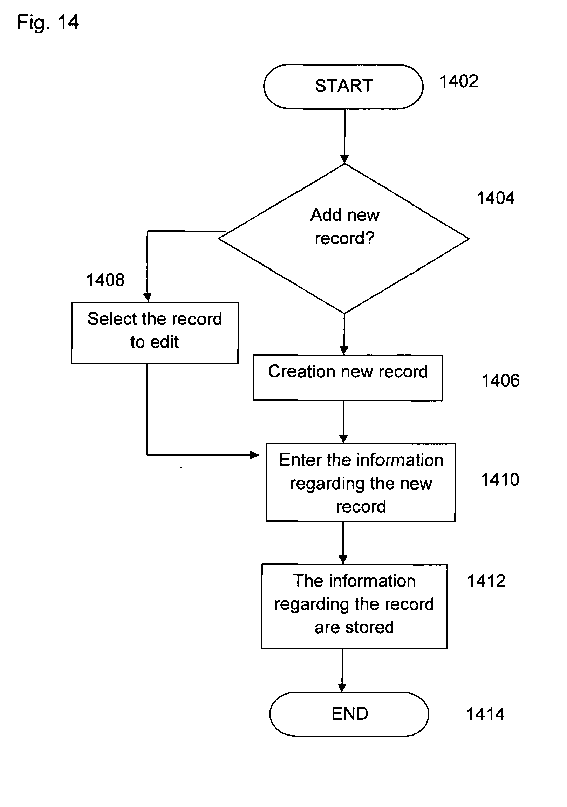

Figure 14 is a flowchart representing the model execution of the method for adding or editing information associated with an attachment. The method begins at step 1402 and proceeds to step 1404, where the investigator chooses between adding a new attachment or editing the information relating to an existing attachment. If the investigator chooses to add a new attachment the method proceeds to step 1406, where the host to which the attachment will be associated is chosen. If the investigator chooses not to add a new attachment the method proceeds to step 1408, where the attachment to be modified is selected. Steps 1406 and 1408 both proceed to step 1410, where the investigator enters information associated with the attachment that is being added or edited. The method saves the changes at step 1412 and terminates at step 1414.

After having added an attachment, the associated information is displayed in the Details tab. The attachments interface provides access to all functions associated with attachments, such as adding a new attachment, generating a report, generating a report with additional parameters, editing the information associated with an existing attachment or downloading an attachment.

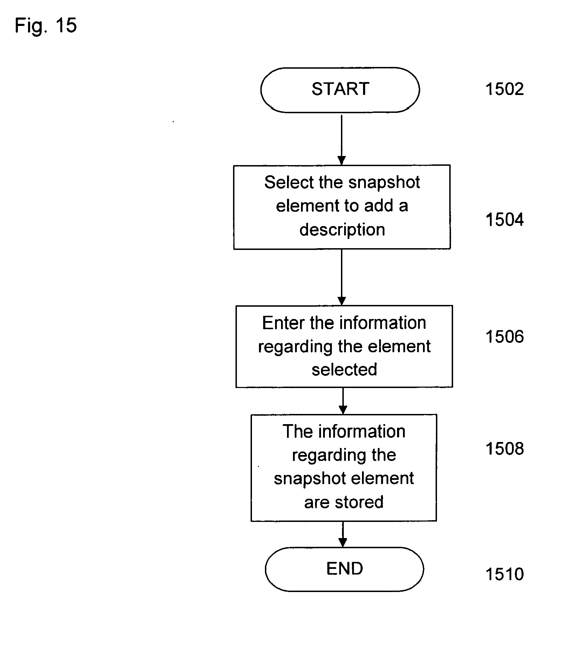

Figure 15 is a flowchart representing the model execution of the method for editing the descriptions associated with a snapshot. The method begins at step 1502 and proceeds to step 1504, where the investigator chooses which element to edit (the sections include, but are not limited to, open ports, active connections, open files, loaded libraries, installed users, and active processes and process instances). At step 1506, the investigator adds information associated with the description of the chosen element. The changes are saved to the database at step 1508 and the method terminates at step 1510.

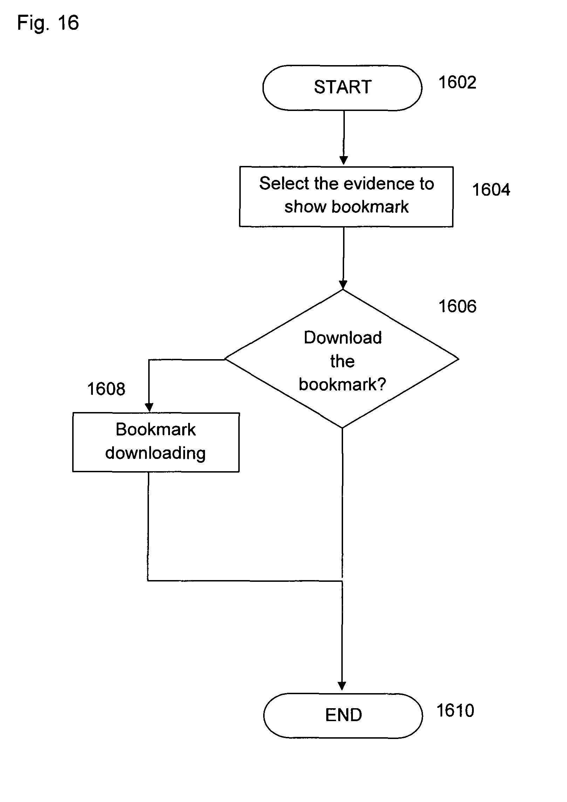

After having added a snapshot, the associated information is displayed on the Details tab. The snapshot interface provides access to all functions pertaining to snapshots, such as accessing the list of open ports, active processes, process instances, files open, libraries loaded, installed users, and installed network interfaces. Each of these sections provides details of the individual element. Figure 16 is a flowchart representing the model execution of the method for displaying bookmark information. The method begins at step 1602 and proceeds to step 1604, where the investigator selects the evidence whose bookmarks he or she wishes to view. After having selected a bookmark, the investigator has the option of downloading the bookmarked material at step 1606. If the investigator chooses to do so, the method proceeds to step 1608 to allow the material (file) to be downloaded. The method terminates at step 1610.

After a bookmark has been created, the associated information is displayed on the Details tab. The bookmark interface allows the investigator to select the bookmark source and view its details. The investigator may also generate a simple report or an advanced report with additional parameters. By selecting a specific source and then a specific folder, the investigator is able to view the details of the selected bookmark. It is also possible to download the bookmarked material.

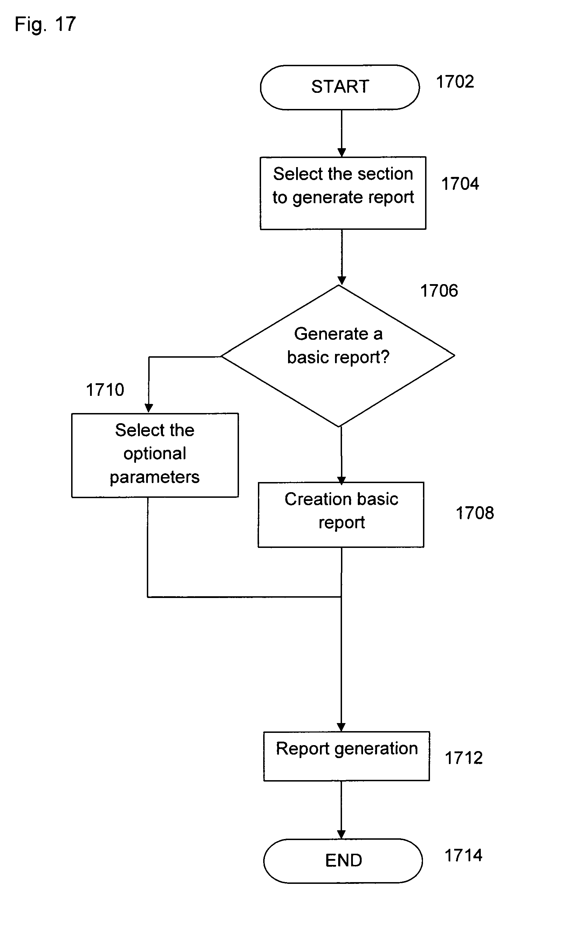

Figure 17 is a flowchart representing the model execution of the method for creating simple reports or reports with specific parameters. The method begins at step 1702 and proceeds to step 1704, where the investigator can choose the section for which a report will be generated. The method proceeds to step 1706, where the investigator chooses between a simple report or an advanced report with additional parameters. If the investigator chooses the former, the method proceeds to step 1708. If the investigator prefers to specify other parameters, such as choice of public key for report encryption, the method proceeds to step 1710. Steps 1708 and 1710 both lead to step 1712, where the report is generated in PDF or IODEF format. The method terminates at step 1714.

The report interface gives access to all reporting functions, such as creating a simple report or generating an advanced report with additional parameters.

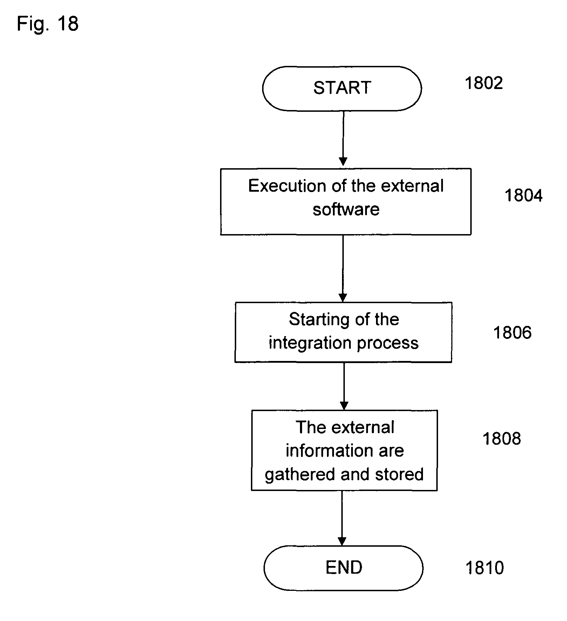

Figure 18 is a flowchart representing the model execution of the method for interfacing external tools with the invention. The method begins at step 1802 and proceeds to step 1804, where the external tool supported by the invention is started. The method proceeds to step 1806, where the investigator starts the integration process. The integration process may be performed in two modes: active or passive. In the active mode, the external tool sends the requested information to the invention. In the passive mode, the tool generates reports and the invention then executes a function to import those reports. Among the active-mode options, it is also possible to choose whether to send the information in real time or not. Tools that support event management (SIM, firewall, IPS, IDS) will send information in real time, while those that do not (for example, forensic analysis tools) will only send information upon receiving a command from the user. The method delivers information to the invention at step 1808 and terminates at step 1810.

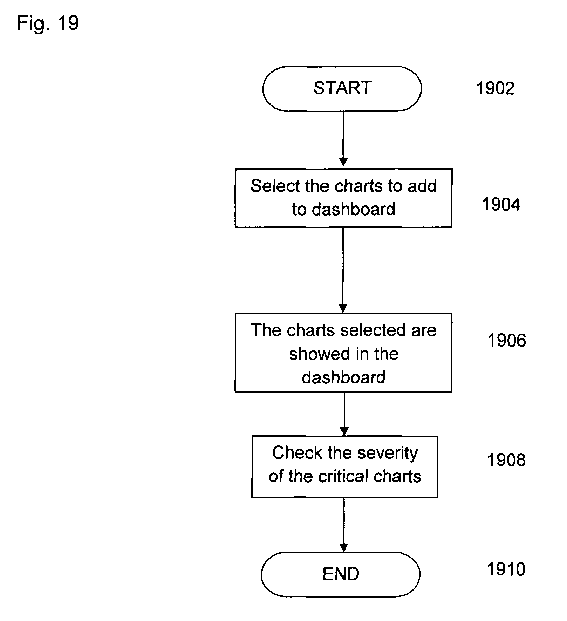

The interface displayed after login provides access to all invention functions. These include sections such as "Forensics and Response" or "ITILity Help Desk Framework", the list of most recent internal messages received, the list of active tasks, the list of anonymous reports, the list of latest security updates (RSS feed), or the logout function. Each of these sections provides functions relating to subsections of interest. The main menu provides access to the dashboard, task manager, integration functions, anonymous reports, search, messaging, lab management, wizard template, report template, settings and user's manual. Figure 19 is a flowchart representing the model execution of the method for accessing and configuring the dashboard. The method begins at step 1902 and proceeds to step 1904, where the investigator chooses which graphic representations to add to his/her dashboard. The graphs are defined beforehand and regard all aspects of the invention. The method displays the resulting graphs at step 1906. At step 1908, the critical values are checked to ensure proper management of notifications. The method terminates at step 1910.

The dashboard interface allows the investigator to view all graphs chosen during the configuration step. The investigator can add or remove individual graphs. The invention provides a series of precompiled graphs and the investigator has the possibility of adding customized ones.

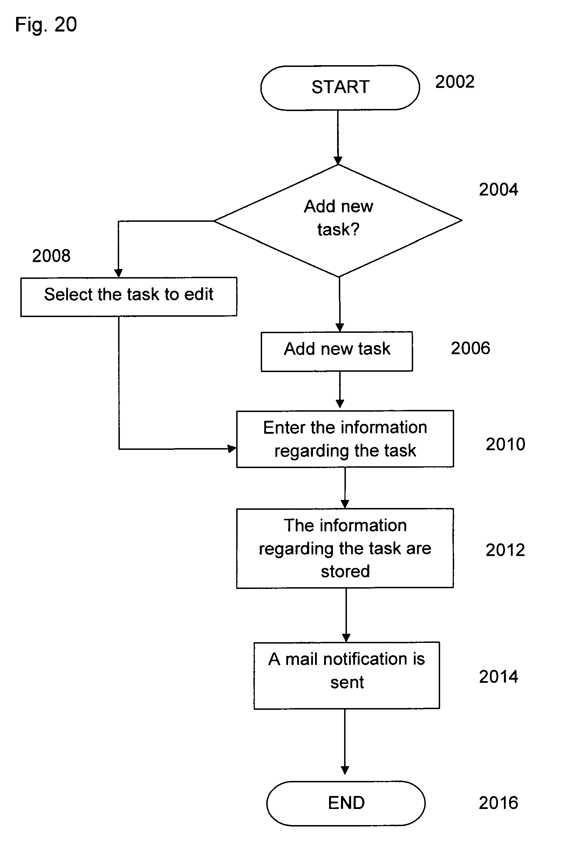

Figure 20 is a flowchart representing the model execution of the method for adding or editing information associated with a task. The method begins at step 2002 and proceeds to step 2004, where the investigator chooses whether to add a new task or edit the information relating to an existing task. For a new task, the method proceeds to step 2006. To edit a task, the method proceeds to step 2008, where the investigator chooses the task to be edited. Tasks 2006 and 2008 both lead to task 2010, where the investigator adds information to the task being added or edited. The method saves the changes at step 2012 and sends an email to notify active investigators step 2014. The method terminates at step 2016.

The task interface displays all tasks assigned in the section. The investigator may view task progress (percentage), assigned task operators, send instantaneous messages or create a new task.

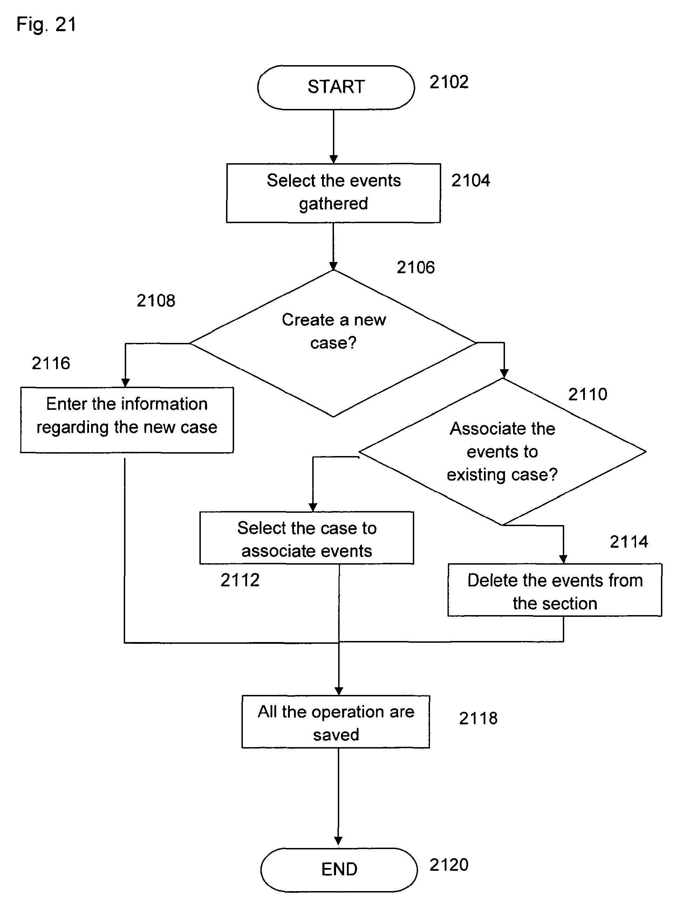

Figure 21 is a flowchart representing the model execution of the method for managing notifications from external tools. The method begins at step 2102 and proceeds to step 2104, where the investigator selects the events of interest. These preliminary operations lead to step 2106, where the investigator chooses whether to create a new case based on those events step 2108. If the investigator chooses not to create a new case, the method proceeds to step 2110, where the investigator decides whether to add the selected events to an existing case step 2112 or delete the selected events from the invention step 2114. An affirmative response at step 2106 leads to step 2116, where the investigator adds information regarding a new case (see the procedure for creating a new case at Fig. 2). An affirmative response at step 2110 leads to step 2112, where the investigator selects the case with which to associate the selected events. Steps 2112, 2114 and 2116 all lead to step 2118, where the operations performed are saved to the database. The method terminates at step 2120.

The event management screen is divided into three main sections: the list of sources that have generated events; the time-scale representation of registered events; and the list of events in table format. Filters may be used to display the events in the table in three different ways: only events that have been converted into cases; only events not converted into cases; or all events with no filters. After having selected the events of concern, the investigator may convert the events into cases, add the events to an existing case, or delete the events. The investigator may select an event source to access details of the event.

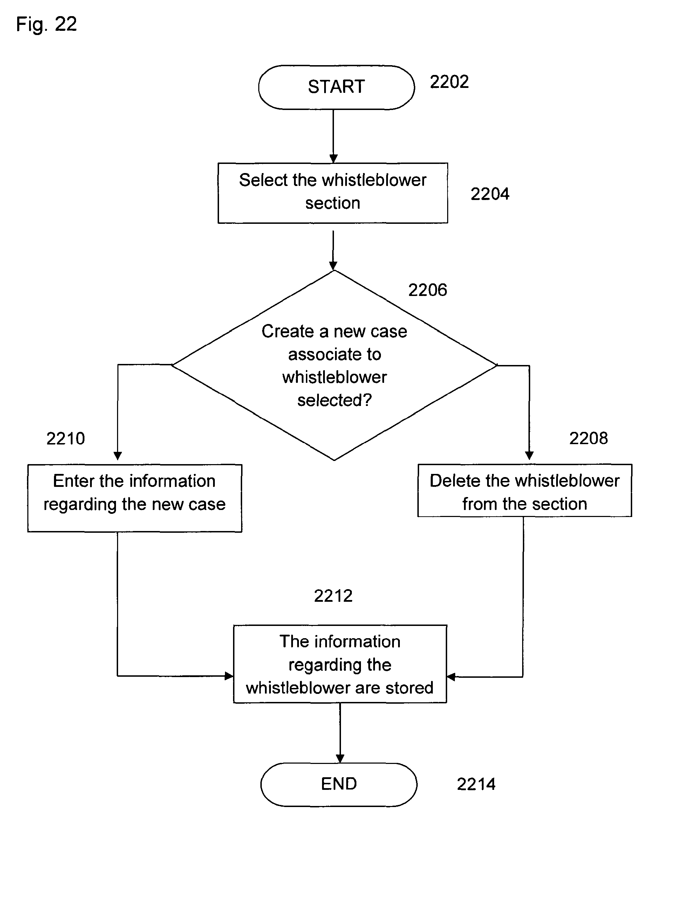

Figure 22 is a flowchart representing the model execution of the method for managing anonymous reports. The method begins at step 2202 and proceeds to step 2204, where the investigator selects the events of concern. After this preliminary operation, the method proceeds to step 2206, where the investigator decides whether to create a new case based on those events or delete the events from the invention step 2208. If the investigator chooses to create a new case, the method proceeds to step 2210, where the investigator supplies the information associated with the new case (see the procedure for creating a new case at Fig. 2). Steps 2210 and 2208 both lead to step 2212, where the method saves or deletes the information as indicated. The method terminates at step 2214.

The anonymous notification interface displays all received reports and all reports that have been converted into cases. In this section, the investigator can delete individual notifications or convert them into a new case.

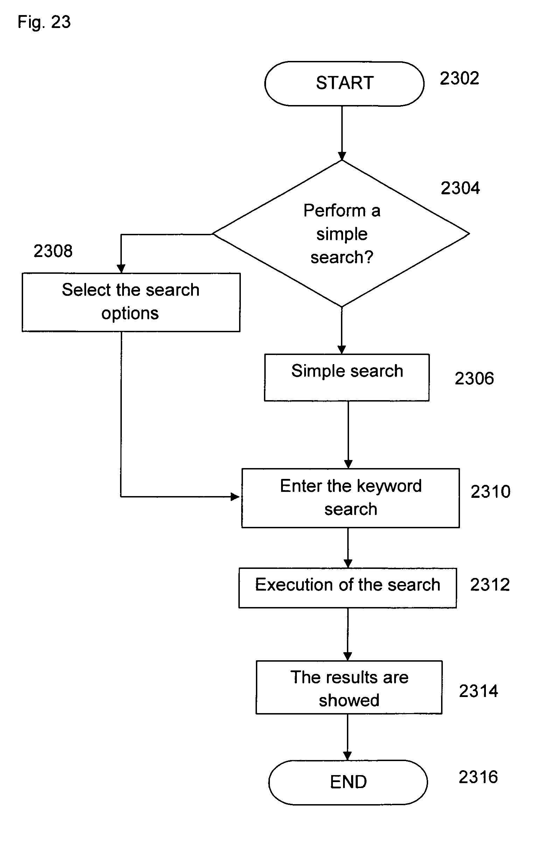

Figure 23 is a flowchart representing the model execution of the method for performing searches. The method begins at step 2302 and proceeds to step 2304, where the investigator chooses between simple or advanced searches. The method then proceeds to step 2306 for simple searches or to step 2308 for advanced searches. At step 2308 the investigator specifies the advanced search criteria. Steps 2306 and 2308 both lead to step 2310, where the investigator enters the keyword or series of keywords to seek. The method performs the search at step 2312 and displays the results at step 2314. The method terminates at step 2316.

The search interface allows three types of searches: simple; with section filters; and with logical criteria. The results pane includes details of the element found and offers the possibility of removing the element from the search results list to allow better focus on the results of interest. By selecting a single element, the investigator has direct access to the incident in which the keyword or string was found.

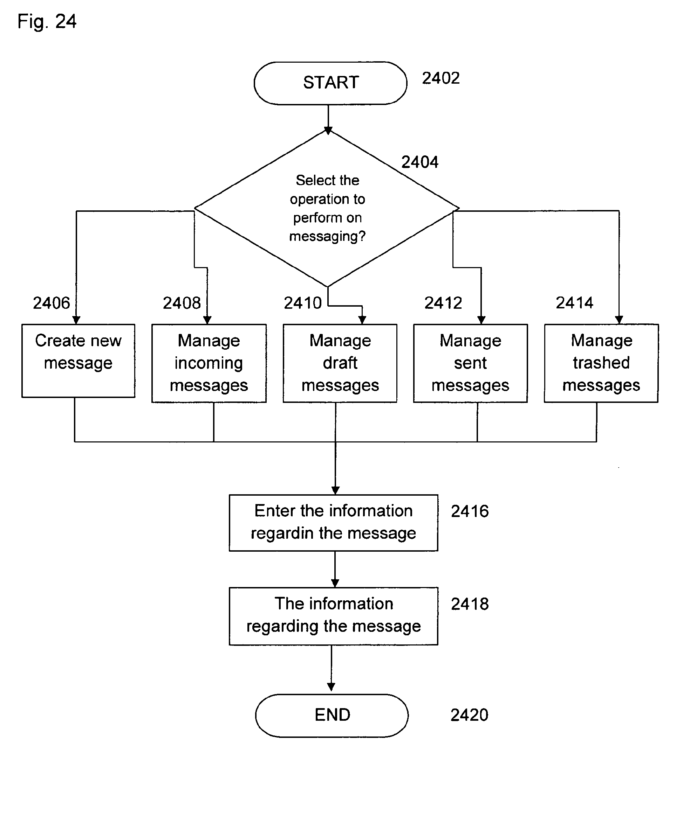

Figure 24 is a flowchart representing the model execution of the method for managing internal messages. The method begins at step 2402 and proceeds to step 2404, where the investigator specifies the messaging section where he/she intends to work. Depending on what the investigator chooses to do, the method proceeds to the corresponding step: create a new message step 2406; manage incoming messages step 2408; manage draft messages step 2410; manage sent messages step 2412; manage eliminated messages step 2414. After having selected the section, the method proceeds with the selection of the specific action step 2416. The method proceeds to step 2418, where the chosen operation is carried out, and terminates at step 2420.

The messaging section offers two differently structured screens, both of which provide a list of the available subsections. The first screen is where the user can create a new message, choosing its recipient, specifying the subject and writing the body of the message. The message can be saved as a draft or sent to the chosen recipients. The second screen allows consultation of messages contained in the Inbox, Outbox, Drafts and Trash folders.

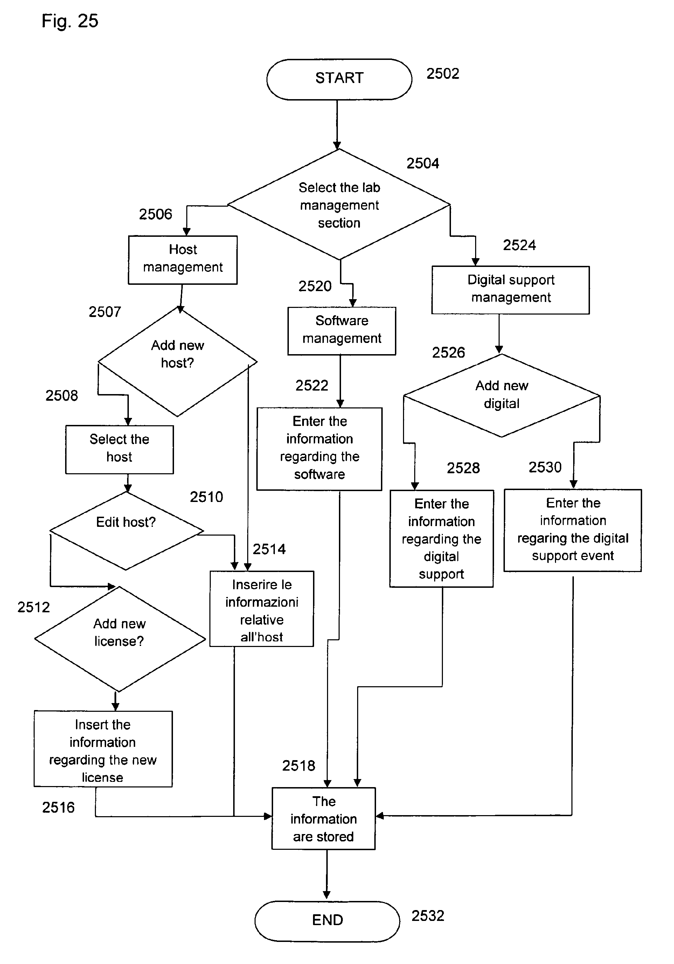

Figure 25 is a flowchart representing the model execution of the method for adding or editing information associated with a forensic laboratory. The method begins at step 2502 and proceeds to step 2504, where the investigator chooses which section to work in. If the investigator chooses to manage hosts, the method proceeds to step 2506, where the investigator chooses whether to add or select an host 2507, he can select an host by step 2508 and edit it by step 2510, or add a new software license to the selected host step 2512. If the investigator chooses to add or edit a host, the method proceeds to step 2514, where the investigator provides the necessary information regarding the host. If the investigator needs to add or edit a software license, the method proceeds to step 2516. Steps 2516 and 2514 both proceed to step 2518, where the new information is saved to the database. If the investigator chooses to manage the software 2520, the method proceeds to step 2522, where the investigator enters information regarding the software to be added or edited. Step 2522 leads to step 2518, where the added information is saved to the database. If the investigator chooses to work on storage media, the method proceeds to step 2524, and at step 2526 the investigator chooses whether to add or edit a storage device or add an event to the timeline of a specific storage medium. If the investigator chooses to add or modify a storage medium, the method proceeds to step 2528, where the investigator supplies information regarding the medium. If the investigator chooses to add a new event to a storage medium timeline, the method proceeds to step 2530, where the investigator supplies information on the event. Steps 2528 and 2530 both proceed to step 2518, where the added information is saved to the database. The method terminates at step 2532.

The Laboratory Management screen is composed of two main sections: the tree showing all the elements in the forensic laboratory; and the section showing the details of a selected element on the tree. Each element added to the forensic lab has an associated barcode deriving from its unambiguous label. The details pane allows the addition of new hosts to the forensic lab, new software licenses associated with a host, or new software. It is also possible to add a new mass storage device with its respective timeline events.

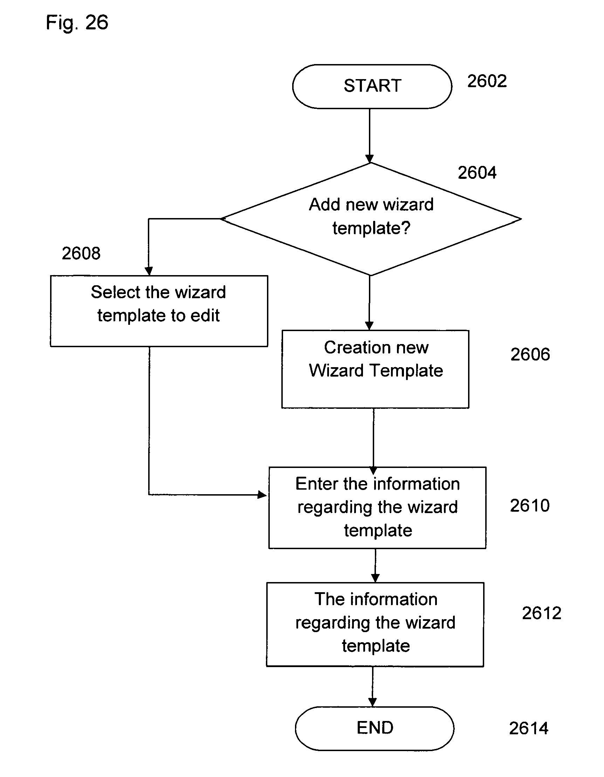

Figure 26 is a flowchart representing the model execution of the method for adding or editing information associated with an incident template (template wizard). The method begins at step 2602 and proceeds to step 2604, where the investigator chooses between editing an existing template or creating a new template step 2606. If the investigator chooses to edit an existing template, the model proceeds to step 2608, where the investigator selects the template to modify. Steps 2606 and 2608 both proceed to step 2610, where the investigator adds the information associated with the template. Step 2610 proceeds to step 2612, where the added or edited information is saved to the database. The method terminates at step 2614.

The template wizard is composed of two sections: the left side shows the list of saved case templates, while the right side shows details for the selected template or the screen for the creation of a new template.

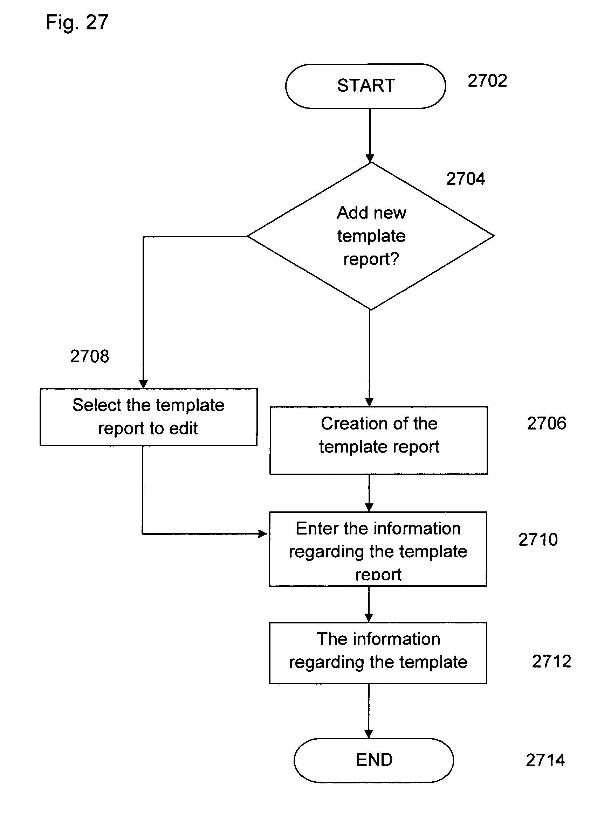

Figure 27 is a flowchart representing the model execution of the method for adding or editing information associated with a report template. The method begins at step 2702 and proceeds to step 2704, where the investigator chooses whether to edit an existing report template or create a new one step 2706. If the investigator opts to edit an existing report template, the method proceeds to step 2708, where the investigator chooses the template to modify. Steps 2706 and 2708 proceed to step 2710, where the investigator adds/edits information associated with the template. Step 2710 leads to step 2712, where the edited or added information is saved to the database. The method terminates at step 2714.

The report template screen is composed of two sections: one on the left showing the list of saved report templates, and one on the right showing details for the report template selected from the list or the pane for the creation of a new report template.

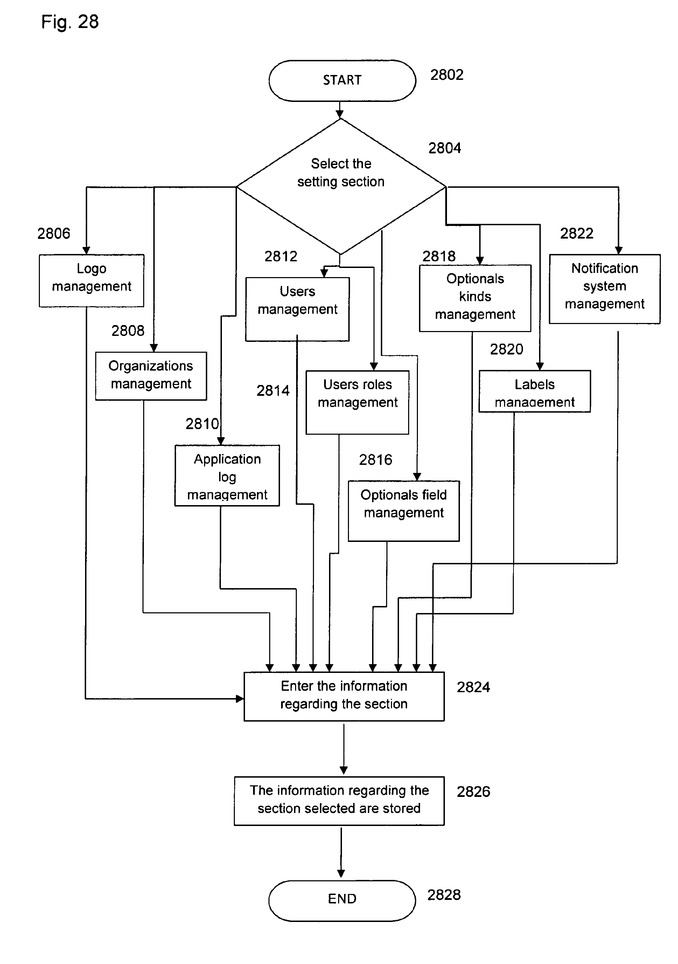

Figure 28 is a flowchart representing the model execution of the method for managing invention settings. The method begins at step 2802 and proceeds to step 2804, where the investigator selects the settings of interest: addition or editing of the logo used on the interface or in reports step 2806; addition or editing of an organization step 2808; analysis of invention application logs step 2810; management of roles for the invention, the forensics and response section, utility section, or persons assigned to the case step 2812; addition or editing of operators step 2814; addition or editing of optional fields step 2816: a total of ten optional fields may be enabled for each section of the invention); addition of a new item to a menu step 2818: each administrator can add custom items to pull-down menus); creation of a label step 2820: labels may be specified and used automatically when cases, hosts, evidence or clones are created or added); configuration of mail service step 2822. Steps 2802 and 2804 both proceed to step 2824, where the investigator adds/edits information for each section of interest. The method saves all operations performed to the database at step 2826 and terminates at step 2828.

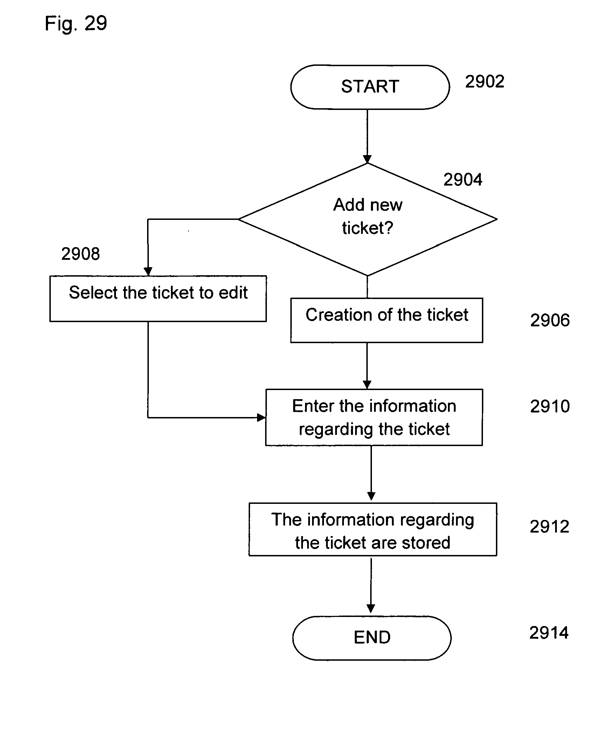

The settings screen allows the user to modify the logo for the application and for the reports, manage or edit organizations, view the application log, manage the roles assigned via the invention, manage users, manage optional fields, manage optional menu items, manage labels and configure the messaging (email) service. Figure 29 is a flowchart representing the model execution of the method for adding or editing information associated with a ticket. The method begins at step 2902 and proceeds to step 2904, where the investigator chooses whether to add a new ticket or edit the information for an existing ticket. If the investigator wishes to create a new ticket, the method proceeds to step 2906, if not, the method goes to step 2908 to select a ticket to be modified. Steps 2906 and 2908 proceed to step 2910, where the investigator supplies the necessary information for the ticket that is being added or edited. The method saves all operations performed to the database at step 2912 and terminates at step 2914.

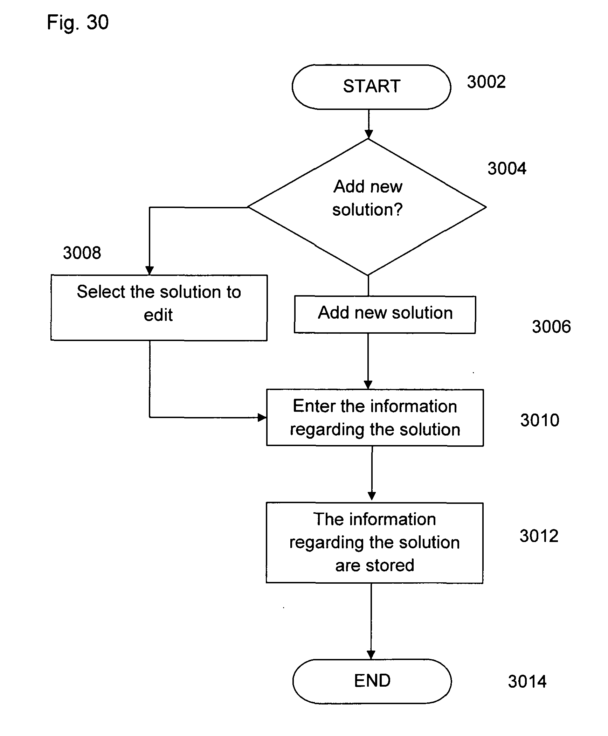

After a new ticket has been created, the information is displayed on the Details tab. The ticket interface displays the list of tickets that have been created but not yet assigned and the list of tickets that have been assigned and are currently in progress. The investigator can access the screen for creating a ticket, access the list of created and assigned tickets, access solutions, or edit a selected ticket. Figure 30 is a flowchart representing the model execution of the method for adding or editing information associated with a solution. The method begins at step 3002 and proceeds to step 3004, where the investigator chooses whether to add a new solution or edit an existing solution. The choice to create a new solution leads to step 3006. If the investigator decides not to create a new solution, the method proceeds to step 3008 for the selection of the solution to be modified. Steps 3006 and 3008 both lead to step 3010, where information is provided regarding the solution that is being added or edited. The method saves all information to the database at step 3012 and terminates at step 3014.

After a new solution is created, the related information is displayed on the Details tab. The solution interface displays the list of solutions added to the invention. The screen allows the investigator to create a new solution, edit an existing solution, or approve/reject a solution as being applicable to a ticket.

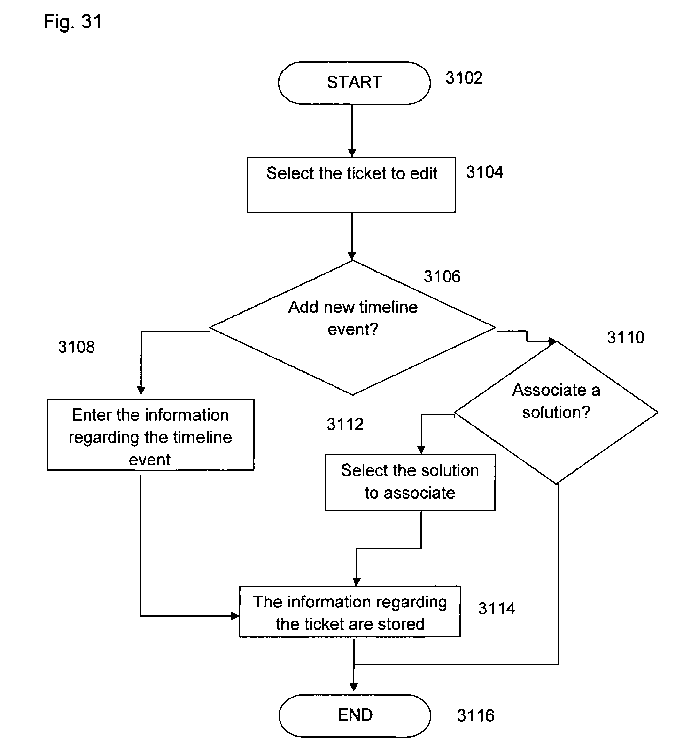

Figure 31 is a flowchart representing the model execution of the method for adding or editing events on the ticket timeline and associating a solution with the ticket. The method begins at step 3102 and proceeds to step 3104, where the investigator selects the ticket on which to work. The proceeds to step 3106, where the investigator chooses between adding a new timeline event or associating an approved solution. If the investigator chooses to add a new event, the method proceeds to step 3108, where information is supplied regarding the new event. If the investigator chooses to assign a new solution 3110, the method goes to step 3112 to select the solution. Steps 3108 and 3112 lead to step 3114. The method saves the information to the database at step 3114 and terminates at step 3116.

The Details tab in the ticket section shows the details of the selected ticket. The screen includes the section with general information about the ticket, actions undertaken to resolve the ticket and the solutions associated with the ticket. At any time it is possible to change the user dealing with the solution to the ticket, edit general information associated with a ticket, add a new timeline event to a ticket, edit the information associated with a timeline event, remove an event from the timeline or associate an approved solution with the ticket in question.

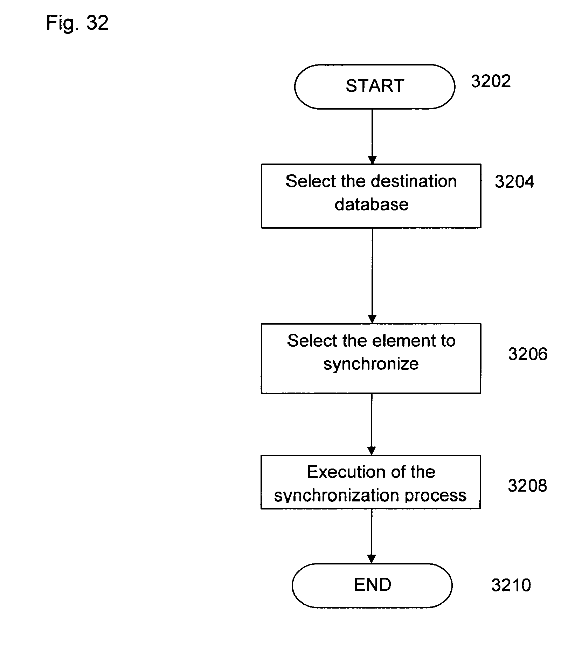

Figure 32 is a flowchart representing the model execution of the method for synchronizing two databases used by the invention. The method begins at step 3202 and proceeds to step 3204, where the user selects the target database. The method proceeds to step 3206, where the investigator selects the element to be synchronized. The actual synchronization is carried out at step 3208 and the method terminates at step 3210.

The synchronization screen shows the settings for carrying out the synchronization of two databases used by the invention. The section displays the connection parameters to the database to be synchronized and the cases that can be synchronized with the database.

## Claims

1. A method for the control, management and analysis of information security cases **characterized in the fact that** comprises the creation of a structured record (case) including the specific information associated with an information security case; an electronic storage of one or more items of digital evidence (methods, restoration actions, impacts, notes, timeline, chain of custody, hosts, evidence, evidence clones, snapshots, bookmarks); an association of said items with a specific case.

2. A method for the control, management and analysis of information security cases, as described in claim 1, **characterized in the fact that** includes the process of acquiring information associated with cloned disks of the original evidence and includes the acquisition and processing of log files obtained from the acquisition devices.

3. A method for the control, management and analysis of information security cases, as described in claim 1, **characterized in the fact that** includes the acquisition process for reports generated by external tools. It also comprises the inclusion of IODEF standards and the collection of associated data and entails a structure created for storing information based on a relational database.

4. A method for the control, management and analysis of information security cases, as described in claim 1, **characterized in the fact that** provides that the addition of digital evidence requires the creation of an element that may be categorized as a host, evidence, clone, note, record, method, impact, restoration action, snapshot, bookmark, chain of custody or timeline. It also includes the creation and definition of roles for each operator with access privileges commensurate to their roles. Every role has an associated access level. Therefore it includes the creation of unambiguous labels for each element within the invention.

5. A method for the control, management and analysis of information security cases, as described in claim 1, **characterized in the fact that** includes the creation of barcodes for each element registered in the invention. It also includes the possibility of importing photographic evidence and extracting EXIFF data where present and the management of the timeline of events occurring during the investigation process.

6. A method for the control, management and analysis of information security cases, as described in claim 1, **characterized in the fact that** includes chain-of-custody management, identifying all persons having access to evidence and having a role in its processing and the management and communication of notes collected during the investigation process.

7. A method for the control, management and analysis of information security cases, as described in claim 1, **characterized in the fact that** includes management of information regarding the methods used to perpetrate the attack, abuse information resources or cause a service incident. It also includes the management of information regarding the impact of the incident.

8. A method for the control, management and analysis of information security cases, as described in claim 7, **characterized in the fact that** includes management of information regarding impacts on the network infrastructure, the management of information regarding temporal impacts and monetary impacts.

9. A method for the control, management and analysis of information security cases, as described in claim 1, **characterized in the fact that** includes management of restoration actions or solutions implemented to resolve or mitigate the effects of the incident. It also includes the collection of all digital evidence in a dedicated section.

10. A method for the control, management and analysis of information security cases, as described in claim 9, **characterized in the fact that** includes the calculation of hash values (MD5 and SHA1) for stored digital evidence.

11. A method for the control, management and analysis of information security cases, as described in claim 1, **characterized in the fact that** includes the management of volatile information from systems involved in the incident collected by external tools. It also includes the collection and management of digital evidence recovered or exported from external forensic analysis tools and the generation and management of reports in simple format or with advanced protection options.

12. A method for the control, management and analysis of information security cases, as described in claim 11, **characterized in the fact that** includes the management and use of operator public keys.

13. A method for the control, management and analysis of information security cases, as described in any of previous claims, **characterized in the fact** that the hardware for the invention comprises: a server with an installed DBMS for case management, a memory for saving cases and one or more client computers used as clients for entering digital evidence;

14. The A method for the control, management and analysis of information security cases, as described in claim 13, **characterized in the fact that** provides for the automatic creation of encrypted backups.

15. A method for the control, management and analysis of information security
cases, as described in claim 13, **characterized in the fact that** must offer a sufficient performance level to allow navigation using commonly available browsers.
